# EUROPÄISCHE PATENTSCHRIFT

(11) **EP 2 948 278 B1**
(45) Veröffentlichungstag und Bekanntmachung des Hinweises auf die Patenterteilung: **16.11.2016**
(21) Anmeldenummer: 14701702.4
(22) Anmeldetag: 21.01.2014
(51) Int. Cl.: B25J 15/06, B65G 47/91

(54) **FLÄCHENSAUGGREIFER**
SUCTION GRIPPER FOR FLAT ARTICLES
VENTOUSE POUR DES ARTICLES PLATS

(30) Priorität: 25.01.2013 DE 102013201247
(43) Veröffentlichungstag der Anmeldung: 02.12.2015
(73) Patentinhaber: J. Schmalz GmbH, 72293 Glatten (DE)
(72) Erfinder: HARTER, Leonhard, 72290 Wittendorf (DE)
(74) Vertreter: DREISS Patentanwälte PartG mbB
(86) Internationale Anmeldenummer: PCT/EP2014/051087
(87) Internationale Veröffentlichungsnummer: WO 2014/114619

(56) Entgegenhaltungen:
- EP-A1- 1 083 032
- EP-A2- 2 014 587
- DE-A1- 3 728 286
- US-A- 4 674 785

## Beschreibung

Die Erfindung betrifft einen Flächensauggreifer zum Ansaugen und Handhaben von Werkstücken gemäß dem Oberbegriff des Anspruchs 1, mit einem Gehäuse, in welchem eine mit Unterdruck beaufschlagbare Unterdruckkammer vorgesehen ist und das Gehäuse an seiner dem Werkstück zugewandten Saugseite Saugöffnungen mit einem Saugquerschnitt aufweist, wobei dieser Saugseite ein flexibler Belag zugeordnet ist, der an das Werkstück angelegt wird.

Derartige Flächensauggreifer dienen insbesondere zum lageweisen Ergreifen und Anheben von Gegenständen, wie beispielsweise lagestabile Flachmaterialien, wie z.B. Bretter oder Platten, oder von kleineren Gegenständen, wie z.B. Dosen, Bechern, Schalen oder dergleichen. Der Flächensauggreifer weist einen flexiblen Belag auf, der üblicherweise an die Oberseite der zu greifenden Gegenstände angelegt wird. Als vorteilhaft hat sich ein Schaumstoffbelag erwiesen, da sich dieser an die mitunter unebene Oberfläche gut anschmiegt. Dabei besteht aber weiterhin das Problem, dass unterschiedliche Gegenstände unterschiedliche Oberflächen aufweisen und mitunter zwischen den Gegenständen große Lücken bestehen. Insbesondere Konserven- oder Getränkedosen weisen einen nach oben ragenden Rand auf. Aufgrund eines solchen Randes wird die zur Verfügung stehende Saugfläche verringert, wodurch ein Anheben der Gegenstände nur mit einer erhöhten Saugkraft realisiert werden kann. Ferner problematisch ist, wenn verschiedene Gegenstände mit verschieden hohen, sich in axialer Richtung erstreckenden Rändern oder sonstigen Erhebungen, wie zum Beispiel Schnellverschlusslaschen von Dosen, gegriffen werden sollen.

Das Strömungsverhalten des Flächensauggreifers muss also exakt auf die zu greifenden Gegenstände abgestimmt sein. Daher ist der Schaumstoffbelag bei herkömmlichen Flächensauggreifern (DE 10 2006 050 970 A1) mit einer Decklagenschicht versehen, welche Saugöffnungen aufweist, deren Strömungsquerschnitt exakt an die zu greifenden Gegenstände angepasst sind.

Bei anderen Flächensauggreifern sind die Saugöffnungen mit Strömungsventilen versehen, die bei nicht belegter Öffnung diese verschließen, so dass die Strömungsverluste klein gehalten werden.

Soll nun ein Flächensauggreifer nach einem Arbeitsprozess für andere Gegenstände verwendet werden, muss dieser nahezu bei jedem Wechsel an die anderen Gegenstände angepasst werden, indem die Strömungsquerschnitte und/oder die Strömungswiderstände geändert oder Strömungsventile eingebaut oder entfernt werden. Dies ist nicht nur zeitraubend sondern auch umständlich und führt mitunter zu Fehlfunktionen.

Aus der DE 10 2006 012 895 A1 ist ein Flächensauggreifer bekannt, der eine Saugplatte mit einer Vielzahl von Saugöffnungen aufweist, die mit einem Schieber, der an der Innenseite des Gehäuses montiert ist, veränderbar oder einstellbar sind. Hierfür muss aber das Gehäuse geöffnet werden, was mitunter nicht gewünscht oder z.B. mangels Werkzeug möglich ist. Aus den Druckschriften US 2003/0164620 A1, DE 100 09 108A1, DE 196 46 186A1, EP 0 267 874 A1, DE 30 47 717 A1, DE 20 2012 000627 U1 sind Flächensauggreifer mit schichtartigem Aufbau mehrerer flächiger Bauteile wie Saugplatten und Lochschablonen bekannt. Die EP 2 014 587 A2 beschreibt einen Flächensauggreifer mit den Merkmalen des Oberbegriffs des Anspruchs 1.

Der vorliegenden Erfindung liegt daher die Aufgabe zugrunde, einen Flächensauggreifer der eingangs genannten Art dahingehend weiterzubilden, dass er innerhalb kürzester Zeit für andere Gegenstände umgerüstet werden kann.

Dieser Aufgabe wird mit einem Flächensauggreifer des Anspruchs 1 gelöst.

Mit dem erfindungsgemäßen Flächensauggreifer wird mittels einer Folie, die sich zwischen dem Gehäuse und dem flexiblen Belag befindet, der Sauggreifer an die Anforderungen für die zu greifenden Gegenstände eingestellt. Am Gehäuse muss also nicht mehr wie bisher der Boden entfernt und gegen einen Boden mit anderen Saugöffnungen, die einen größeren oder kleineren Öffnungsquerschnitt aufweisen, ausgetauscht werden, sondern der Boden des Gehäuses wird mit einer Folie belegt, die ihrerseits die auf die Gegenstände abgestimmte Größe der Strömungsquerschnitte definiert. Der Wechsel der Folie ist wesentlich einfacher, als ein Wechsel des gesamten Bodens. Das Gehäuse muss nicht geöffnet werden und es ist kein Werkzeug erforderlich.

Bei einer Weiterbildung der Erfindung liegen die Saugöffnung und die Strömungsöffnung koaxial zueinander. Der Öffnungsquerschnitt der Saugöffnung am Boden des Gehäuses weist eine größere Querschnittsfläche auf, als der Öffnungsquerschnitt der Strömungsöffnung, so dass durch die Strömungsöffnung der Folie die Luftmenge steuerbar ist. Es besteht aber bei einer anderen Ausführungsform auch die Möglichkeit, dass durch mehr oder weniger großen Versatz der beiden Öffnungen der lichte Querschnitt auf das gewünschte Maß verändert wird.

Bei einer Weiterbildung ist vorgesehen, dass die Strömungsöffnung einen von der Kreisform abweichenden Querschnitt aufweist. Dieser kann rechteckförmig, dreieckförmig, kleeblattförmig, ellipsenförmig oder andere geeignete Formen annehmen.

Eine andere Variante sieht vor, dass die Saugöffnung am Gehäuse und/oder die Strömungsöffnung an der Folie jeweils einen Kreisquerschnitt aufweist. Der Kreisquerschnitt besitzt den wesentlichen Vorteil, dass er definierte und bekannte Strömungsverhältnisse besitzt und einfach herstellbar ist.

Eine bevorzugte Ausführungsform der Erfindung sieht vor, dass in der Saugöffnung des Gehäuses ein Ventilkörper, insbesondere eine Ventilkugel, ein Flugkörper, ein Membranventil oder dergleichen, eines Strömungsventils angeordnet ist und die Folie einen Teil des Strömungsventils bildet. Die Saugöffnung ist so groß ausgeführt, dass in dieser oder durch diese hindurch vor dem Auflegen der Folie der Ventilkörper platziert werden kann, so dass er nach dem Auflegen der Folie von dieser in der Saugöffnung zurückgehalten wird. Der Ventilkörper bewegt sich also hinter der Folie und kann eine hinter der Saugöffnung vorgesehene Ventilöffnung ganz oder teilweise verschließen.

Verschiedene Ausführungsformen der Erfindung sehen vor, dass die Folie am Gehäuse festgeklebt oder adhäsiv, mechanisch oder magnetisch gespannt ist oder dass die Folie derart am Gehäuse befestigt ist, dass sie verschiebbar und/oder drehbar ist. Geklebte Folien sind als Wegwerfartikel zur einmaligen Nutzung gedacht und können relativ einfach ausgestaltet sein. Sie können z.B. von einer Vorratsrolle abgezogen und auf die gewünschte Länge zugeschnitten werden. Mechanisch oder magnetisch gespannte Folien werden in eine am Gehäuse vorgesehene Spannvorrichtung eingelegt und gegebenenfalls mit der Spannvorrichtung befestigt. Sie können mehrfach verwendet werden und besitzen für ihre Wiedererkennung eine Kennzeichnung. Bei beweglich befestigten Folien kann vorteilhaft der lichte Strömungsquerschnitt durch den Gehäuseboden und die Folie vermindert und auf die zu greifenden Gegenstände exakt eingestellt werden.

Die Folie kann grundsätzlich einschichtig aufgebaut sein. Vorteilhaft ist aber bei einem bevorzugten Ausführungsbeispiel die Folie zwei- oder mehrschichtig aufgebaut und weist eine Funktionsschicht und eine Befestigungsschicht auf. Die Funktionsschicht besitzt die definierten Strömungsöffnungen, wohingegen die Befestigungsschicht dazu dient, dass die Folie am Gehäuse befestigt, z.B. angeklebt oder gespannt werden kann. Bei einer Verklebung besteht die Befestigungsschicht aus einem Haftvermittler, der so aufgebracht ist, dass er einen genügend großen Abstand zum Strömungsquerschnitt aufweist, so dass er nicht in den freien Strömungsquerschnitt hineinragt. Die Befestigungsschicht weist demnach zu den Strömungsöffnungen korrespondierende Durchbrüche auf, in deren lichter Öffnung die Strömungsöffnungen liegen.

Bei einem bevorzugten Ausführungsbeispiel besteht die Funktionsschicht aus einem luftdurchlässigen Material, z.B. einem offenporösen oder offenzelligen Schaumstoff, z.B. Polyurethanschaum. Dabei wirkt die Funktionsschicht als Widerstandsschicht. Die Funktionsschicht kann auch aus einem geschlossenzelligen Material, z.B. Schaumstoff bestehen, der genadelt ist.

Dadurch, dass die Befestigungsschicht Durchbrüche aufweist, die Funktionsschicht aber keine diskrete Öffnungen besitzt, wird die Luft in den Bereichen der Durchbrüche der Befestigungsschicht angesaugt.

Bei einer anderen Variante ist vorgesehen, dass die Folie oder die Funktionsschicht Strömungsöffnungen aufweist, in deren Strömungsquerschnitt sich eine elastische Zunge befindet. Diese Zunge ragt in die Strömungsöffnung und besteht aus dem Material der Funktionsschicht. Beim Herstellen der Strömungsöffnungen wird ein Steg stehen gelassen, so dass die Zunge vom Innern der Strömungsöffnung gebildet wird. Bei starker Luftströmung biegt sich die Zunge in Strömungsrichtung und legt sich an die Saugöffnung des Bodens an und wirkt als Ventilplättchen.

Bei einer bevorzugten Ausführungsform besteht die Folie ganz oder es besteht wenigstens eine Schicht aus Metall, einem Faserverbundstoff, Keramik, Glas oder Kunststoff. Insbesondere die Schicht aus Metall oder Kunststoff besitzt die definierten Strömungsöffnungen, wohingegen die andere Schicht z.B. die Befestigungsschicht ist.

Wie bereits erwähnt, kann die Folie als Schnellwechselfolie ausgebildet sein, und kann bevorzugt zur exakten Positionierung am Gehäuse Positionierhilfen aufweisen. Diese Positionierhilfen können z.B. Aufnahmeöffnungen für am Gehäuse vorgesehene Zentrierzapfen sein.

Weitere Vorteile, Merkmale und Einzelheiten der Erfindung ergeben sich aus den Unteransprüchen sowie der nachfolgenden Beschreibung, in der unter Bezugnahme auf die Zeichnung eine besonders bevorzugte Ausführungsform beschrieben ist.

In der Zeichnung zeigen:
Figur 1 eine perspektivische Ansicht des erfindungsgemäßen Flächensauggreifers;
Figur 2 einen Querschnitt durch den Flächensauggreifer, und

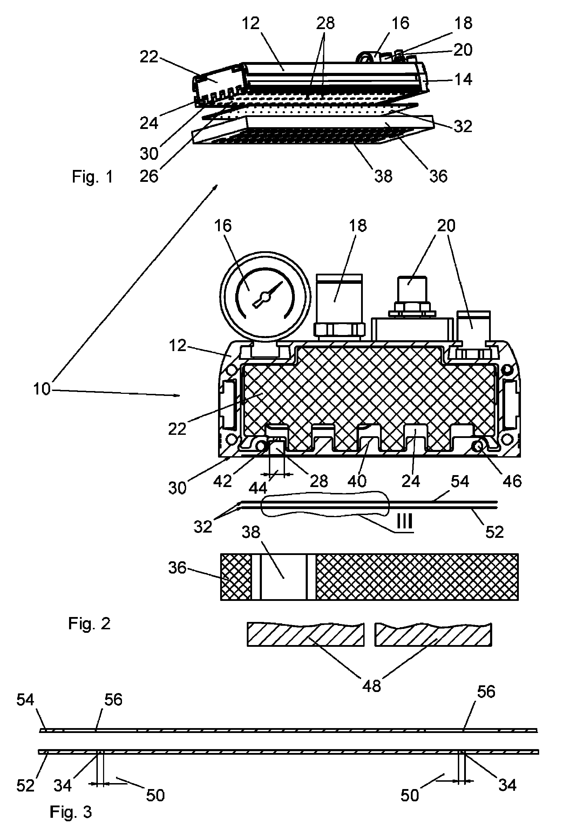

Figur 2 eine vergrößerte Wiedergabe des Ausschnitts III der Folie gemäß Figur 2.

In der Figur 1 ist perspektivische Ansicht ein Flächensauggreifer 10 dargestellt, der ein Gehäuse 12 aufweist, welches z.B. ein Abschnitt eines Strangpressprofils ist. Alternativ kann das Gehäuse 12 auch ein Blechbiegeteil, ein 3D-Druckteil, ein Gussteil, CFK-Teil, Frästeil oder Schweißteil sein. Das Gehäuse 12 ist von zwei (nicht dargestellten) Endkappen stirnseitig verschlossen. An einer Endkappe sind ein Manometer 16, ein Druckluftanschluss 18 und sind weitere Anschlüsse 20 erkennbar, die für die Erfindung nicht wesentlich sind. Im Gehäuse 12 befindet sich ein Einschubelement 22, welches den freien Innenraum des Gehäuses 12 verkleinert und an seiner Unterseite Nuten 24 aufweist. Korrespondierend zu diesen Nuten 24 besitzt das Gehäuse 12 an seinem Boden 26 mehrere Reihen mit Saugöffnungen 28. Außerdem ist erkennbar, dass der Boden 26 von einem Rand 30 umgeben ist, der sich geringfügig vom Boden 26 abhebt.

Wie aus Figur 2 ersichtlich, kann auf den Boden 26 und innerhalb des Randes 30 eine Folie 32 aufgesetzt werden, die mit ihrer Unterseite beispielsweise bündig mit dem Rand 30 abschließt. Der Boden 26 kann auch randfrei ausgeführt sein. Die Folie 32 besitzt Strömungsöffnungen 34, die örtlich zu den Saugöffnungen 28 korrespondieren. Den unterseitigen Abschluss des Flächensauggreifers 10 bildet ein flexibler Belag 36, welcher eine Schaumstoffmatte oder Dichtplatte und/oder z.B. mehrere Elastomersauger aufweist. In diesem Belag 36 sind eine Vielzahl von Schlitzen 38 oder allgemein Öffnungen eingebracht, die wiederum mit den Strömungsöffnungen 34 örtlich korrespondieren.

In die Nuten 24 des Einschubelements 22 greifen Stege 40 des Bodens 26 ein. Eine oder alle Stege 40 sind mit Bohrungen 42 versehen, die in den Saugöffnungen 28 aus dem Boden 26 ausmünden. Dabei sind die Saugöffnungen 28 kreisförmig ausgebildet und besitzen einen Saugquerschnitt 44. Der Vollständigkeit halber sei erwähnt, dass in einem der Stege 40 ein Druckluftkanal 46 vorgesehen ist, der mit dem Druckluftanschluss 20 verbunden ist und der zum Vereinzeln des angesaugten Werkstücks dient.

Die Folie 32 besitzt, wie aus Figur 3 ersichtlich, Strömungsöffnungen 34, die einen Strömungsquerschnitt 50 besitzen, die das angesaugte Luftvolumen bestimmen, da der Strömungsquerschnitt 50 kleiner ist als der Saugquerschnitt 44. In der dargestellten Ausführungsform weist die Folie 32 in drei Reihen angeordnete Strömungsöffnungen 34 auf, obwohl fünf Stege 40 mit Saugöffnungen 28 vorgesehen sind. Durch die Folie 32 kann also das Saugverhalten des Flächensauggreifers 10 eingestellt werden. Eine andere Ausführungsform der Folie 32 sieht fünf Reihen mit Strömungsöffnungen 34 vor. Die Folie 32 umfasst eine Funktionsschicht 52 sowie eine Befestigungsschicht 54, die dem Boden 26 des Gehäuses 12 oder einer weiteren Klebeschicht zugewandt ist. Die Funktions-schicht 52 besteht dabei aus einem relativ steifen Kunststoff-material oder einem Blech, CFK, Glas oder Keramik und die Befestigungsschicht 54 besteht aus einem Haftvermittler. Dabei sind die Strömungsöffnungen 56 in der Befestigungsschicht 54 größer als oder gleich groß wie die Strömungsöffnungen 34 in der Funktionsschicht 52 und größer als die Saugöffnungen 28 im Boden 26.

Der flexible Belag 36 wird über geeignete Mittel, z.B. ebenfalls eine Klebefolie oder dergleichen, an der Funktionsschicht 52 befestigt, wobei die Schlitze 38 mit den Strömungsöffnungen 34 korrespondieren.

Da der lichte Strömungsquerschnitt 50 der Strömungsöffnung 34 der Folie 32 kleiner ist als der Saugquerschnitt 44 der Bohrung 42, können in die Bohrungen 42 Ventilkörper, z.B. Ventilkugeln oder dergleichen, eingesetzt werden, wodurch ein Strömungsventil gebildet wird. Die Ventilkörper werden von der Folie 32 in der Bohrung 42 gehalten, da sie die Strömungsöffnung 34 nicht passieren können. Das Gehäuse 12 kann somit relativ einfach und schnell mit Ventilkörpern bestückt und die einzelnen Strömungsventile durch Aufkleben der Folie 32 verschlossen werden. Außerdem ist leicht verständlich, dass der Flächensauggreifer 10 schnell dadurch an andere Werkstücke 48 angepasst werden kann, indem die Folie 32 gegen eine andere Folie ausgetauscht wird und dadurch der Einsatzzweck geändert wird.

## Patentansprüche

1. Flächensauggreifer (10) zum Ansaugen und Handhaben von Werkstücken (48), mit einem Gehäuse (12), in welchem eine mit Unterdruck beaufschlagbare Unterdruckkammer vorgesehen ist und das Gehäuse (12) an seiner dem Werkstück (48) zugewandten Saugseite (26) Saugöffnungen (28) mit einem Saugquerschnitt (44) aufweist, wobei dieser Saugseite (26) ein flexibler Belag (36) zugeordnet ist, der an das Werkstück (48) angelegt wird, wobei zwischen der Saugseite (26) des Gehäuses (12) und dem flexiblen Belag (36) eine Folie (32) zwischengeschaltet ist, und wobei die Folie (32) zu den Saugöffnungen (28) örtlich korrespondierende Strömungsöffnungen (34) aufweist, wobei über den Strömungsquerschnitt (50) der Strömungsöffnungen (34) der Folie (32) der Gesamtströmungswiderstand der Saugöffnungen (28) und der Strömungsöffnungen (34) bestimmbar ist, **dadurch gekennzeichnet, dass** die Folie (32) auswechselbar ausgebildet ist, und dass die Querschnittsfläche des Strömungsquerschnitts (50) kleiner ist als die Querschnittsfläche des Saugquerschnitts (44).

2. Flächensauggreifer nach Anspruch 1, **dadurch gekennzeichnet, dass** die Saugöffnungen (28) und die Strömungsöffnungen (34) koaxial zu einander liegen.

3. Flächensauggreifer nach einem der vorhergehenden Ansprüche, **dadurch gekennzeichnet, dass** die Strömungsöffnung (34) einen von der Kreisform abweichenden Strömungsquerschnitt (50) aufweist.

4. Flächensauggreifer nach Anspruch 1 oder 2, **dadurch gekennzeichnet, dass** die Saugöffnung (28) und/oder die Strömungsöffnung (34) einen Kreisquerschnitt aufweisen.

5. Flächensauggreifer nach einem der vorhergehenden Ansprüche, **dadurch gekennzeichnet, dass** in der Saugöffnung (28) ein Ventilkörper, insbesondere eine Ventilkugel, ein Flugkörper oder ein Membranventil eines Strömungsventils, angeordnet ist und die Folie (32) ein Teil des Strömungsventils, des Ventileinsatzes oder Regelventils bildet.

6. Flächensauggreifer nach einem der vorhergehenden Ansprüche, **dadurch gekennzeichnet, dass** die Folie (32) am Gehäuse (12) festgeklebt, adhäsiv, mechanisch oder magnetisch gespannt ist.

7. Flächensauggreifer nach einem der vorhergehenden Ansprüche, **dadurch gekennzeichnet, dass** die Folie (32) zwei- oder mehrschichtig aufgebaut ist und eine Funktionsschicht (52) und eine Befestigungsschicht (54) aufweist.

8. Flächensauggreifer nach Anspruch 7, **dadurch gekennzeichnet, dass** die Befestigungsschicht (54) zu den Strömungsöffnungen (34) korrespondierende Durchbrüche (56) aufweist, in deren lichter Öffnung die Strömungsöffnungen (34) liegen.

9. Flächensauggreifer nach Anspruch 7 oder 8, **dadurch gekennzeichnet, dass** die Funktionsschicht (52) aus einem luftdurchlässigen Material, z.B. einem offenporösen oder offenzelligen Schaumstoff, z.B. Polyurethan, besteht.

10. Flächensauggreifer nach Anspruch 9, **dadurch gekennzeichnet, dass** die Befestigungsschicht (54) Durchbrüche (56) aufweist, die Funktionsschicht (52) aber keine diskrete Öffnungen aufweist.

11. Flächensauggreifer nach einem der vorhergehenden Ansprüche, **dadurch gekennzeichnet, dass** die Folie (32) Strömungsöffnungen (34) aufweist, in deren Strömungsquerschnitt sich eine elastische Zunge befindet.

12. Flächensauggreifer nach Anspruch 11, **dadurch gekennzeichnet, dass** die Zunge als Ventilplättchen für die Saugöffnung (28) wirkt.

13. Flächensauggreifer nach einem der vorhergehenden Ansprüche, **dadurch gekennzeichnet, dass** die Folie (32) ganz oder wenigstens eine Schicht (52) der Folie aus Metall, CFK, Keramik oder Kunststoff besteht.

14. Flächensauggreifer nach einem der vorhergehenden Ansprüche, **dadurch gekennzeichnet, dass** die Folie (32) als Schnellwechselfolie, mit Positionshilfen, ausgebildet ist.

## Claims

1. A large-area vacuum gripper (10) for suctioning and manipulating workpieces (48), having a housing (12), in which a vacuum chamber that can be subjected to a vacuum is provided, wherein the housing has suction openings (28) at its suction surface (26) facing the workpiece (48), the suction openings (28) having a suction cross-section (44), wherein a flexible lining (36) is allocated to the suction surface (26), which flexible lining (36) is configured to abut to the workpiece (48), wherein a film (32) is inserted between the suction surface (26) of the housing (12) and the flexible lining (36), and wherein the film (32) has flow openings (34) corresponding spatially to the suction openings (28), wherein the overall flow resistance of the suction openings (28) and the flow openings (34) can be determined via the flow cross-section (50) of the flow openings (34) in the film (32), **characterized in that** the film (32) is configured to be replaceable, and **in that** the cross-section area of the flow cross-section (50) is smaller than the cross-section area of the suction cross-section (44).

2. The large-area vacuum gripper according to Claim 1, **characterized in that** the suction openings (28) and the flow openings (34) are positioned such that they are coaxial to one another.

3. The large-area vacuum gripper according to one of the preceding Claims, **characterized in that** the flow opening (34) has a flow cross-section (50) that is not circular.

4. The large-area vacuum gripper according to Claim 1 or 2, **characterized in that** the suction opening (28) and/or the flow opening (34) have a circular cross-section.

5. The large-area vacuum gripper according to one of the preceding Claims, **characterized in that** a valve body, in particular a valve ball, a vane element, or a membrane valve of a flow control valve is disposed in the suction opening (28), and the film (32) forms a part of the flow control valve, the valve insert, or a regulating valve.

6. The large-area vacuum gripper according to one of the preceding Claims, **characterized in that** the film (32) is glued to the housing (12), or is attached thereto by adhesively, mechanically, or magnetically.

7. The large-area vacuum gripper according to one of the preceding Claims, **characterized in that** the film (32) has a two- or multi-layer construction, and has a functional layer (52) and an attachment layer (54).

8. The large-area vacuum gripper according to Claim 7, **characterized in that** the attachment layer (54) has interruptions (56) corresponding to the flow openings (34), such that the flow openings (34) lie in the clear openings thereof.

9. The large-area vacuum gripper according to Claim 7 or 8, **characterized in that** the functional layer (52) is made of an air permeable material, e.g. an open porous or open-cell foam rubber, e.g. polyurethane.

10. The large-area vacuum gripper according to Claim 9, **characterized in that** the attachment layer (54) has interruptions (56), but the functional layer (52) has no discreet openings.

11. The large-area vacuum gripper according to one of the preceding Claims, **characterized in that** the film (32) has flow openings (34), in which an elastic tongue is located in the flow cross-section thereof.

12. The large-area vacuum gripper according to Claim 11, **characterized in that** the tongue functions as a valve platelet for the suction opening (28).

13. The large-area vacuum gripper according to one of the preceding Claims, **characterized in that** the entire film (32), or at least one layer (52) thereof, is composed of metal, carbon fiber reinforced plastic, ceramic, or plastic.

14. The large-area vacuum gripper according to one of the preceding Claims, **characterized in that** the film (32) is designed as a quick replacement film having positioning aids.

## Revendications

1. Ventouse grande surface (10) destinée à aspirer et à manipuler des pièces (48), comprenant un boîtier (12) dans lequel est prévue une chambre à dépression apte à être mise sous dépression, et le boîtier (12) présentant, sur sa surface d'aspiration (26) montrant vers la pièce (48), des ouvertures d'aspiration (28) ayant une section d'aspiration (44), une garniture flexible (36) qui est appliquée contre la pièce (48) étant associée à cette surface d'aspiration (26), une feuille (32) étant intercalée entre la surface d'aspiration (26) du boîtier (12) et la garniture flexible (36), et ladite feuille (32) présentant des ouvertures d'écoulement (34) correspondant localement aux ouvertures d'aspiration (28), la résistance totale à l'écoulement des ouvertures d'aspiration (28) et des ouvertures d'écoulement (34) pouvant être déterminée par la section d'écoulement (50) des ouvertures d'écoulement (34) de la feuille (32), **caractérisée par le fait que** ladite feuille (32) est réalisée de manière échangeable et que l'aire de la section de la section d'écoulement (50) est inférieure à l'aire de la section de la section d'aspiration (44).

2. Ventouse grande surface selon la revendication 1, **caractérisée par le fait que** les ouvertures d'aspiration (28) et les ouvertures d'écoulement (34) sont situées de façon coaxiale les unes par rapport aux autres.

3. Ventouse grande surface selon l'une quelconque des revendications précédentes, **caractérisée par le fait que** l'ouverture d'écoulement (34) présente une section d'écoulement (50) différente de la forme circulaire.

4. Ventouse grande surface selon la revendication 1 ou 2, **caractérisée par le fait que** l'ouverture d'aspiration (28) et/ou l'ouverture d'écoulement (34) présentent une section circulaire.

5. Ventouse grande surface selon l'une quelconque des revendications précédentes, **caractérisée par le fait qu'**un corps de soupape, en particulier une bille de soupape, un corps volant ou une soupape à diaphragme d'une vanne d'écoulement est disposé dans l'ouverture d'aspiration (28) et que la feuille (32) forme une partie de la vanne d'écoulement, de l'insert de valve ou de la soupape de réglage.

6. Ventouse grande surface selon l'une quelconque des revendications précédentes, **caractérisée par le fait que** la feuille (32) est fixée par collage, tendue de manière adhésive, mécanique ou magnétique sur le boîtier (12).

7. Ventouse grande surface selon l'une quelconque des revendications précédentes, **caractérisée par le fait que** la feuille (32) est réalisée à deux ou plusieurs couches et présente une couche fonctionnelle (52) et une couche de fixation (54).

8. Ventouse grande surface selon la revendication 7, **caractérisée par le fait que** la couche de fixation (54) présente des percées (56) correspondant aux ouvertures d'écoulement (34), dans l'ouverture libre desquelles sont situées les ouvertures d'écoulement (34).

9. Ventouse grande surface selon la revendication 7 ou 8, **caractérisée par le fait que** la couche fonctionnelle (52) est réalisée dans une matière perméable à l'air, par exemple une mousse à pores ouverts ou à cellules ouvertes, tel que le polyuréthane.

10. Ventouse grande surface selon la revendication 9, **caractérisée par le fait que** la couche de fixation (54) présente des percées (56), mais que la couche fonctionnelle (52) ne présente pas d'ouvertures discrètes.

11. Ventouse grande surface selon l'une quelconque des revendications précédentes, **caractérisée par le fait que** la feuille (32) présente des ouvertures d'écoulement (34) dans la section d'écoulement desquelles est située une languette élastique.

12. Ventouse grande surface selon la revendication 11, **caractérisée par le fait que** ladite languette agit comme lame de soupape pour l'ouverture d'aspiration (28).

13. Ventouse grande surface selon l'une quelconque des revendications précédentes, **caractérisée par le fait que** la feuille (32) est fait dans l'ensemble ou au moins une couche (52) de la feuille est fait de métal, de plastique renforcé de fibres de carbone, de céramique ou de matière plastique.

14. Ventouse grande surface selon l'une quelconque des revendications précédentes, **caractérisée par le fait que** la feuille (32) est réalisée en tant que feuille à échange rapide ayant des aides au positionnement.
